# FASCICULE DE BREVET EUROPEEN

(11) **EP 1 721 461 B1**
(45) Date de publication et mention de la délivrance du brevet: **10.09.2008**
(21) Numéro de dépôt: 05717647.1
(22) Date de dépôt: 22.02.2005
(51) Int. Cl.: H04N 7/14

(54) **SYSTEME DE PRISE DE VUE ET TELEPHONE, TELEPHONE MOBILE ET SUPPORT DE TELEPHONE MIS EN OEUVRE DANS CE SYSTEME**
BILDERFASSUNGSSYSTEM UND TELEFON, MOBILTELEFON UND VON DEM SYSTEM VERWENDETER TELEFONHALTER
IMAGE TAKING SYSTEM AND A TELEPHONE, A MOBILE TELEPHONE AND A TELEPHONE HOLDER USED BY SAID SYSTEM

(30) Priorité: 02.03.2004 FR 0402157
(43) Date de publication de la demande: 15.11.2006
(73) Titulaire: FRANCE TELECOM, 75015 Paris (FR)
(72) Inventeur: BRUNO, Adrien, F-06130 Grasse (FR)
(74) Mandataire: Loisel, Bertrand
(86) Numéro de dépôt international: PCT/FR2005/000413
(87) Numéro de publication internationale: WO 2005/096627

(56) Documents cités:
- EP-A- 0 884 905
- US-A- 5 838 368
- US-A1- 2003 117 497

## Description

L'invention concerne un système de prise de vue et un téléphone, un téléphone mobile et un support de téléphone mis en oeuvre dans ce système.

Plus précisément, l'invention concerne un système de prise de vue comportant :
- un premier téléphone mobile, apte à établir des liaisons téléphoniques avec un autre téléphone par l'intermédiaire d'un réseau téléphonique, ce téléphone mobile étant équipé d'au moins un point de prise de vue pour prendre des images, et
- un second téléphone apte à afficher les images prises à l'aide du premier téléphone mobile.

Aujourd'hui, de nombreux téléphones mobiles sont capables de prendre une photo ou de filmer une scène puis de la transmettre via le réseau téléphonique vers un terminal distant tel qu'un autre téléphone mobile apte à afficher la photo ou la scène transmise. A cet effet, les téléphones mobiles comportent, par exemple, un objectif formant point de prise de vue. L'objectif est, par exemple, celui d'un appareil photographique ou d'une caméra.

Ces téléphones mobiles comportent également un écran et des moyens pour restituer sur cet écran l'image prise à partir du point de prise de vue.

Dans de tels systèmes de prise de vue, pour cadrer une image, l'utilisateur du téléphone mobile doit déplacer manuellement l'objectif jusqu'à ce que le cadrage de l'image observée sur l'écran du téléphone mobile soit correct. Dans les systèmes de prise de vue connus, il est donc nécessaire pour cadrer correctement une image de prévoir sur le téléphone mobile les moyens techniques nécessaires pour visualiser localement, c'est-à-dire sur ce téléphone mobile, l'image prise afin de pouvoir modifier ou valider le cadrage actuel.

L'invention vise à remédier à cet inconvénient en proposant un système de prise de vue à l'aide d'un téléphone dans lequel il n'est pas nécessaire de visualiser localement l'image prise pour la cadrer.

L'invention a donc pour objet un système de prise de vue, caractérisé en ce qu'il comporte au moins un moteur commandable propre à déplacer le ou chaque point de prise de vue du premier téléphone mobile en réponse à des commandes de déplacement reçues par le premier téléphone mobile, et en ce que le second téléphone comporte un module pour envoyer des commandes de déplacement au premier téléphone mobile par l'intermédiaire du réseau téléphonique.

Dans le système ci-dessus, contrairement aux systèmes connus, c'est le second téléphone qui est utilisé pour effectuer le cadrage des images prises à partir du premier téléphone. Dès lors, il n'est plus nécessaire de visualiser localement sur le premier téléphone les images prises à partir de ce premier téléphone.

Suivant d'autres caractéristiques supplémentaires prises seules ou en combinaison, le système conforme à l'invention se caractérise en ce que :
- ledit au moins un moteur est solidaire du premier téléphone mobile ;
- le ou chaque point de prise de vue est monté à rotation autour d'un premier et d'un second axes de rotation non colinéaires, et ledit au moins un moteur est apte à déplacer en rotation le ou chaque point de prise de vue autour des premier et second axes, les rotations autour du premier et du second axes étant commandables indépendamment l'une de l'autre ;
- il comporte un support indépendant du premier téléphone mobile, ce support indépendant comportant des moyens d'accouplement/désaccouplement mécaniques du premier téléphone mobile au support, et ce support comportant ledit au moins un moteur, ledit au moins un moteur étant apte à déplacer lesdits moyens d'accouplement/désaccouplement en réponse aux commandes de déplacement reçues par le premier téléphone mobile de manière à déplacer le ou chaque point de prise de vue ;
- le support indépendant comporte une benne mobile équipée des moyens d'accouplement/désaccouplement mécaniques, et ledit au moins un moteur est apte à déplacer ladite benne en réponse aux commandes de déplacement reçues par le premier téléphone mobile ;
- le premier téléphone mobile comporte deux points de prise de vue espacés l'un de l'autre de manière à pouvoir réaliser des images en stéréoscopie ;
- le ou chaque point de prise de vue comporte un zoom réglable en réponse à des commandes de zoom reçues par le premier téléphone mobile, et le second téléphone comporte un module pour envoyer des commandes de zoom au premier téléphone mobile par l'intermédiaire du réseau téléphonique ;
- le premier téléphone mobile comporte au moins une caméra équipée du ou de chaque point de prise de vue.

L'invention a également pour objet un téléphone, un téléphone mobile et un support adaptés pour être mis en oeuvre dans un système de prise de vue conforme à l'invention.

L'invention sera mieux comprise à la lecture de la description qui va suivre donnée uniquement à titre d'exemple et faite en se référant aux dessins sur lesquels :
- la figure 1 est une illustration schématique d'un téléphone mobile apte à être mis en oeuvre dans un système conforme à l'invention ;
- la figure 2 est une illustration schématique de l'architecture d'un système de visiophonie conforme à l'invention ;
- la figure 3 est un organigramme d'un procédé de visiophonie conforme à l'invention, et
- la figure 4 est une illustration schématique d'une variante du téléphone de la figure 1.

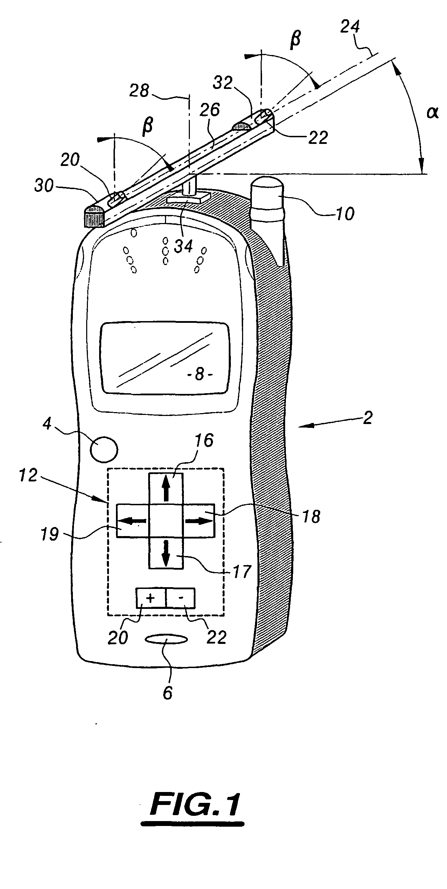

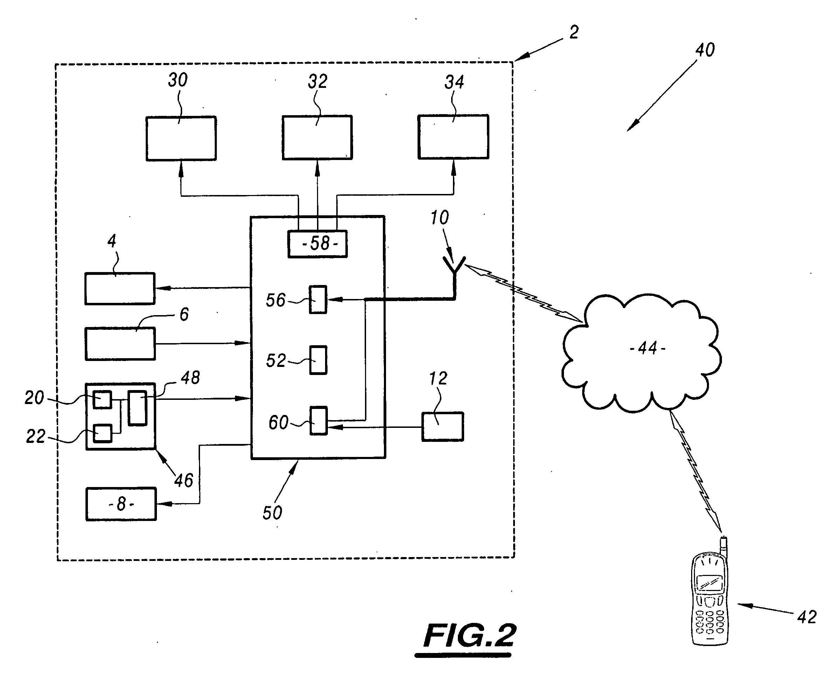

La figure 1 représente principalement la face avant d'un téléphone mobile vertical 2 apte à être mis en oeuvre dans le système de visiophonie de la figure 2. Ici seuls les éléments du téléphone 2 nécessaires à la compréhension de l'invention sont décrits en détail. De plus, l'architecture interne de ce téléphone sera décrite plus en détail en regard de la figure 2.

De manière à pouvoir être utilisé dans un système de visiophonie, le téléphone 2 comporte :
- un haut-parleur 4,
- un microphone 6, et
- un écran 8.

Ici, l'écran 8 est un écran à trois dimensions stéréoscopique. De tels écrans permettent de produire un effet trois dimensions sans l'usage de lunettes spécifiques. A cet effet, ces écrans sont basés sur la méthode « parallax barrier ». Pour plus d'informations, le lecteur pourra se référer au rapport « 3D Consortium sub committee activities joint press conference, Members Exhibition », du 10 septembre 2003, accessible en ligne à l'adresse suivante :
http://www.3dc.gr.ip/english/index.html.

Plus précisément le lecteur pourra consulter l'article du Professeur Matsuyama de l'Université de Kyoto à cette adresse.

Le téléphone 2 est également équipé d'une antenne 10, pour capter des fréquences radio, et d'un clavier 12.

Seules les touches du clavier 12 utilisées pour la mise en oeuvre de l'invention ont été représentées ici.

Ainsi, le clavier 12 comporte quatre touches de déplacement 16 à 19 respectivement vers le haut, le bas, la droite et la gauche. Le clavier 12 comporte également une touche 20 de zoom vers l'avant et une touche 22 de zoom vers l'arrière.

Pour son utilisation dans un système de visiophonie, le téléphone 2 comporte également un appareil de prise de vue. Ici, de manière à pouvoir produire des images stéréoscopiques, cet appareil de prise de vue comporte deux objectifs 20 et 22 séparés l'un de l'autre d'une distance égale, par exemple, à 64 mm. Ces objectifs 20 et 22 forment les points de prise de vue du téléphone 2. Les objectifs 20 et 22 sont déplaçables en rotation autour d'un axe commun horizontal 24. Cet axe 24 est solidaire d'une poutre horizontale 26, elle-même montée à rotation autour d'un axe vertical 28 solidaire d'un châssis du téléphone 2. La distance focale des objectifs 20 et 22 est commandable de manière à réaliser des zooms vers l'avant ou vers l'arrière.

Pour déplacer en rotation les objectifs 20 et 22 autour de l'axe 24, le téléphone 2 comporte deux moteurs électriques commandables 30 et 32 associés respectivement aux objectifs 20 et 22.

Le téléphone 2 comporte également un moteur commandable 34 propre à déplacer en rotation la poutre 26 autour de l'axe 28. Ainsi, en commandant ces moteurs, il est possible de déplacer les objectifs 20 et 22 et donc les points de prise de vue correspondants par rapport au châssis du téléphone 2.

Ici, la position angulaire de la poutre 26 par rapport à une position de référence est représentée par un angle α et la position angulaire des objectifs 20 et 22 par rapport à la verticale est représentée par un angle β.

La figure 2 représente un système de visiophonie désigné par la référence générale 40 destiné à être utilisé pour réaliser des visioconférences à l'aide de téléphones mobiles. Ce système 40 comporte à cet effet le téléphone 2 et un autre téléphone mobile 42 aptes chacun à établir une liaison radio de transmission d'informations par l'intermédiaire d'un réseau téléphonique 44. Ce réseau 44 est, par exemple, un réseau GSM (Global System for Mobile communication), un réseau GPRS (General Packet Radio Service), un réseau UMTS (Universal Mobile Telecommunication System) ou encore un réseau WIFI (Wireless Local Area Network).

Les éléments du téléphone 2 déjà décrit en regard de la figure 1 portent les mêmes références numériques.

Sur la figure 2, l'appareil de prise de vue du téléphone 2 porte la référence 46 et comporte les deux objectifs 20 et 22 raccordés à l'entrée d'un capteur CCD 48 (Charge-Coupe Device) composé d'éléments photosensibles propres à convertir les signaux lumineux captés par les objectifs 20 et 22 en signaux numériques. Cet appareil 46 est adapté pour recevoir des commandes de zoom et pour exécuter, en réponse, un zoom vers l'avant ou vers l'arrière.

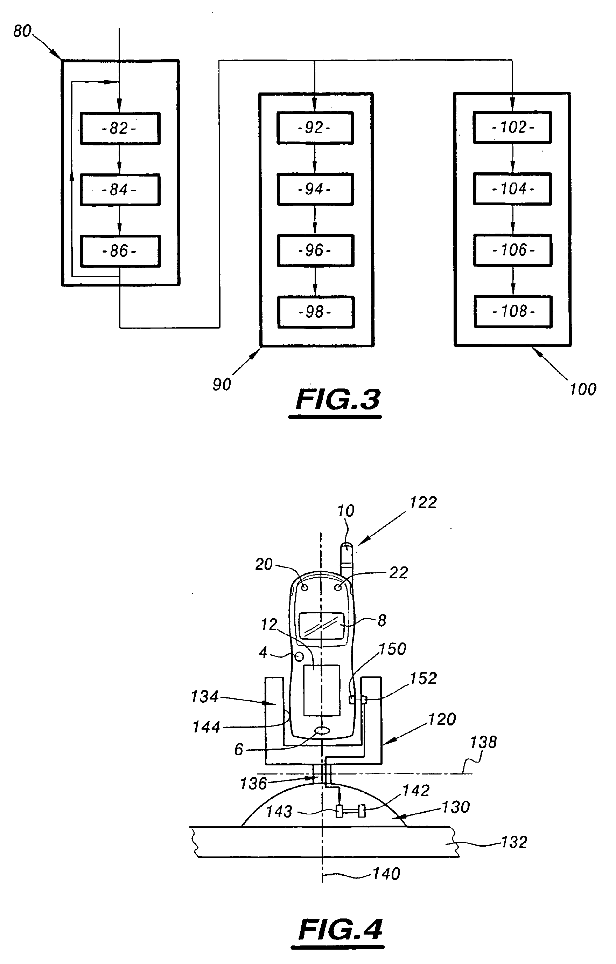

De manière à gérer l'établissement et le maintien d'une liaison téléphonique avec un autre téléphone par l'intermédiaire du réseau 44, le téléphone 2 comporte une unité de traitement 50 raccordée aux différents équipements précédemment décrits. En particulier, cette unité de traitement 50 comporte un module conventionnel 52 de gestion d'une visioconférence établie entre le téléphone 2 et un autre téléphone par l'intermédiaire du réseau 44. Les fonctionnalités de ce module 52 seront décrites plus en détail en regard du procédé de la figure 3.

L'unité de traitement 50 comporte également un module 56 de réception de commandes de déplacement transmises par l'intermédiaire du réseau 44 et de l'antenne 10. Ce module 56 est apte à extraire du flux de données reçu les commandes de déplacements destinées à déplacer les points de prises de vue 20, 22. De manière à discriminer les commandes de déplacement des données de voies et d'images, un canal de communication spécifique aux commandes de déplacement est prévu. Il est également possible de faire précéder ces commandes de déplacement d'un en-tête spécifique permettant de les identifier.

Le module 56 est également apte à recevoir des commandes de zoom vers l'avant ou vers l'arrière transmises par l'intermédiaire du réseau 44. Ces commandes de zoom sont dirigées par le module 56 vers l'appareil 46.

Un module 58 de commande des moteurs 30, 32 et 34 est prévu dans l'unité de traitement 50. Ce module 58 est propre à commander les moteurs 30, 32 et 34 en fonction des commandes de déplacement reçues par le module 56.

Finalement, l'unité de traitement 50 comporte un module 60 d'envoi de commandes de déplacement par l'intermédiaire de l'antenne 10 et du réseau 44. Ce module 60 est associé au clavier 12, et plus précisément aux touches 16 à 19, 20 et 22. Le module 60 est adapté pour générer les commandes de déplacement suivantes :
- une commande de déplacement entraînant une rotation de la poutre 26 autour de l'axe 28 vers la droite si la touche 18 est enfoncée et vers la gauche si la touche 19 est enfoncée, et
- une commande de déplacement entraînant une rotation identique autour de l'axe 24 des objectifs 20 et 22 vers le haut si la touche 16 est enfoncée et vers le bas si la touche 17 est enfoncée.

Le module 60 est également apte à envoyer par l'intermédiaire de l'antenne 10 et du réseau 44 une commande zoom vers l'avant si la touche 20 est enfoncée et une commande de zoom vers l'arrière si la touche 22 est enfoncée.

Le téléphone 42 est similaire au téléphone 2 et comporte les mêmes éléments que ceux décrits pour le téléphone 2 en regard des figures 1 et 2.

Le fonctionnement du système 40 va maintenant être décrit en regard du procédé de la figure 3.

Initialement, l'utilisateur du téléphone 2 initialise et active de façon classique un processus 80 de visioconférence entre les téléphones 2 et 42. Ici, pour simplifier la description, l'utilisateur du téléphone 2 sera appelé utilisateur A et l'utilisateur du téléphone 42 sera appelé utilisateur B.

Lors du processus 80, le téléphone 2 filme en permanence, lors d'une étape 82, l'utilisateur A à l'aide de l'appareil 46. En même temps, et de façon similaire, le téléphone 42 filme l'utilisateur B.

Ces images filmées sont immédiatement transmises en temps réel, lors d'une étape 84, vers l'autre téléphone par l'intermédiaire du réseau 44. Pour chaque téléphone, la transmission et la réception des données de voix et d'images filmées sont gérées par le module 52.

Au fur et à mesure que des données de voix et des données d'images sont reçues par le module 52, celui-ci commande, lors d'une étape 86, la restitution des données de voix par l'intermédiaire de l'haut-parleur 4 et l'affichage des images filmées sur l'écran 8.

A tout moment lors de l'exécution du processus 80, l'un des utilisateurs peut procéder à une modification du cadrage des images reçues en modifiant la position des points de prise de vue de l'appareil de prise de vue utilisé pour les filmer. A cet effet, un utilisateur, par exemple ici l'utilisateur B procède à un processus 90 de cadrage des images reçues.

Au début de ce processus 90, l'utilisateur B enfonce, lors d'une étape 92, l'une des touches 16 à 19 de son téléphone. Le module 60 du téléphone 42 envoie alors, lors d'une étape 94, la commande de déplacement correspondante au téléphone 2 par l'intermédiaire du réseau 44.

Le module de réception 56 du téléphone 2 extrait, lors d'une étape 96, cette commande de déplacement reçue et la transmet à son module de commande 58.

Le module 58 du téléphone 2 commande alors, lors d'une étape 98, les moteurs 30, 32 et 34 de manière à déplacer ses points 20, 22 de prise de vue autour des axes 24 et 28 d'un angle α et d'un angle β correspondant à la commande de déplacement reçue.

Le déplacement des points 20, 22 de prise de vue du téléphone 2 se traduit par une modification du cadrage des images reçues par le téléphone 42.

Egalement à tout moment lors de l'exécution du processus 80, l'un des utilisateurs peut procéder à un processus 100 de zoom vers l'avant ou vers l'arrière. Ici, on suppose que ce processus 100 est activé par l'utilisateur A.

Initialement au début du processus 100, l'utilisateur A enfonce l'une des touches 20 ou 22 lors d'une étape 102. Le module 60 envoie alors, lors d'une étape 104, la commande de zoom correspondante à la touche enfoncée au téléphone mobile 42 par l'intermédiaire du réseau 44.

Le module de réception du téléphone 42 extrait, lors d'une étape 106 similaire à l'étape 96, la commande de zoom reçue. Cette commande de zoom est transmise à l'appareil de prise de vue du téléphone 42, qui réalise lors d'une étape 108, le zoom correspondant à la commande de zoom reçue.

Le système de prise de vue décrit ici dans le cas spécifique d'un système de visiophonie permet d'éviter d'avoir à afficher simultanément sur l'écran 8 une image du correspondant et une image réduite de l'utilisateur. En effet dans les systèmes de visiophonie connus de manière à permettre à chaque utilisateur de maintenir un cadrage satisfaisant lors d'une visioconférence, l'écran de chaque téléphone mobile est divisé en deux fenêtres. La fenêtre la plus vaste est utilisée pour afficher l'image du correspondant tandis que la fenêtre la plus petite est utilisée pour afficher une copie en réduction des images transmises au correspondant. La petite fenêtre permet à l'utilisateur du téléphone de vérifier en permanence que le cadrage des images transmises est satisfaisant et, dans le cas où il s'aperçoit que ce n'est pas le cas, de modifier lui-même manuellement le cadrage des images transmises en modifiant la position du point de prise de vue de son téléphone mobile. Le système 40 permet d'éviter d'avoir recours à cette petite fenêtre sur chacun des écrans des téléphones mobiles impliqués dans la visioconférence.

Les moteurs 30, 32 et 34 ont été ici décrits dans le cas particulier ou ils sont solidaires du téléphone mobile. La figure 4 représente une variante dans laquelle ces moteurs sont solidaires d'un support indépendant 120 propre à déplacer le ou chaque point de prise de vue d'un téléphone 122 équipé pour établir une visioconférence.

Le téléphone 122 est, par exemple, identique au téléphone 2 à l'exception du fait que les objectifs 20 et 22 sont rigidement fixés au châssis du téléphone 122 sans degré de liberté. Ce téléphone 122 ne comporte donc pas de moteur propre à déplacer des objectifs 20 et 22 par rapport au châssis du téléphone. Les éléments du téléphone 122 qui sont identiques à ceux du téléphone 2 portent ici les mêmes références.

Le support 120 comporte un châssis fixe 130 destiné à être fixé sur une surface stable telle qu'un plateau horizontal 132. Le châssis 130 est fixé au plateau 132 à l'aide de moyens de fixation conventionnels.

Le support 120 comporte également une benne 134 mécaniquement raccordée au châssis 130 par l'intermédiaire d'une articulation 136. L'articulation 136 est conçue de manière à permettre un pivotement de la benne 134 autour d'un axe horizontal 138 et une rotation autour d'un axe vertical 140. De manière à déplacer la benne 134 autour des axes 138 et 140, le support 120 comporte un ou plusieurs moteurs 142 sous la commande d'un module de commande 143.

La benne 134 comporte des moyens 144 d'accouplement et de désaccouplement mécaniques du téléphone 122 à la benne 134. Ici ces moyens 144 sont formés, par exemple, par un logement 144 propre à recevoir de manière amovible le téléphone 122.

Pour commander les déplacements de la benne 134 en fonction de commandes de déplacement reçues par le téléphone mobile 122, le téléphone mobile et le support 120 comportent chacun une interface, respectivement 150 et 152, par l'intermédiaire desquelles les commandes de déplacement reçues par le téléphone mobile 122 sont transmises au module de commande 143.

Typiquement, le support 120 est un support portable transportable par l'utilisateur.

Le fonctionnement du système de prise de vue représenté sur la figure 4 est identique à celui décrit en regard du procédé de la figure 3. Toutefois dans cette variante c'est l'ensemble du téléphone qui est déplacé en réponse aux commandes de déplacement et pas seulement les objectifs 20 et 22.

La figure 4 représente un support fixe. En variante, le support fixe est remplacé par un support mobile équipé, par exemple, de roues entraînées en rotation par le moteur 142. Ainsi, dans cette variante, pour déplacer le ou chaque point de prise de vue, le support roule sur le plateau 132 en réponse aux commandes de déplacement.

Les systèmes des figures 2 et 4 ont été décrits dans le cas particulier où les appareils de prise de vue sont capables de filmer une scène. En variante, l'appareil de prise de vue est uniquement capable de prendre une photo.

L'interface homme / machine permettant à l'utilisateur du téléphone mobile de saisir des commandes de déplacement ou des commandes de zoom sur son téléphone mobile a été décrite ici dans le cas particulier où cette interface est formée de touches 16 à 19 et 20, 22. En variante, ces touches sont remplacées par une interface vocale grâce à laquelle les instructions de déplacement et de zoom sont dictées par l'utilisateur.

Le téléphone 42 a été décrit comme étant lui aussi un téléphone mobile. Toutefois, en variante ce téléphone 42 est un téléphone fixe, un appareil de visioconférence ou un ordinateur personnel propre à remplir les mêmes fonctionnalités que celles du téléphone 42.

## Revendications

1. Système de prise de vue comportant :
- un premier téléphone (2 ; 122) mobile, apte à établir au moins une liaison téléphonique avec un second téléphone par l'intermédiaire d'un réseau téléphonique (44), ce premier téléphone mobile étant équipé d'au moins un point (20 ; 22) de prise de vue pour prendre des images, et
- le second téléphone (42) étant apte à afficher les images prises à l'aide du premier téléphone mobile,
**caractérisé en ce que** le premier téléphone comporte au moins un moteur commandable (30, 32, 34 ; 142) propre à déplacer le point de prise de vue en réponse à des commandes de déplacement reçues par le premier téléphone mobile,
- **en ce que** le second téléphone comporte un module (60) pour envoyer les commandes de déplacement au premier téléphone mobile par l'intermédiaire du réseau téléphonique,
- **en ce que** le point de prise de vue est monté à rotation autour d'un premier et d'un second axes (24, 28) de rotation non colinéaires, et
- **en ce que** ledit au moins un moteur est apte à déplacer en rotation le ou chaque point de prise de vue autour des premier et second axes, les rotations autour du premier et du second axes étant commandables indépendamment l'une de l'autre.

2. Système selon la revendication 1, **caractérisé en ce que** ledit au moins un moteur (30, 32, 34) est solidaire du premier téléphone mobile.

3. Système selon la revendication 1, **caractérisé en ce qu'**il comporte un support (120) indépendant du premier téléphone mobile (122), ce support indépendant comportant des moyens (144) d'accouplement/désaccouplement mécaniques du premier téléphone mobile au support, et **en ce que** ce support comporte ledit au moins un moteur (142), ledit au moins un moteur étant apte à déplacer lesdits moyens d'accouplement/désaccouplement en réponse aux commandes de déplacement reçues par le premier téléphone mobile de manière à déplacer ie point de prise de vue.

4. Système selon la revendication 3, **caractérisé en ce que** le support indépendant (120) comporte une benne mobile (134) équipée des moyens (144) d'accouplement/désaccouplement mécaniques, et **en ce que** ledit au moins un moteur est apte à déplacer ladite benne en réponse aux commandes de déplacement reçues par le premier téléphone mobile.

5. Système selon l'une quelconque des revendications précédentes, **caractérisé en ce que** le premier téléphone mobile (2, 122) comporte deux points (20, 22) de prise de vue espacés l'un de l'autre de manière à pouvoir réaliser des images en stéréoscopie.

6. Système selon l'une quelconque des revendications précédentes, **caractérisé en ce que** le point (20, 22) de prise de vue comporte un zoom réglable en réponse à des commandes de zoom reçues par le premier téléphone mobile, et **en ce que** le second téléphone comporte un module (60) pour envoyer des commandes de zoom au premier téléphone mobile par l'intermédiaire du réseau téléphonique.

7. Système selon l'une quelconque des revendications précédentes, **caractérisé en ce que** le premier téléphone mobile comporte au moins une caméra (46) équipée du point de prise de vue.

8. Premier téléphone mobile (2) apte à établir au moins une liaison téléphonique avec un second téléphone par l'intermédiaire d'un réseau téléphonique, ce premier téléphone mobile étant équipé d'au moins un point (20, 22) de prise de vue pour prendre des images, **caractérisé**
- **en ce que** le premier téléphone comporte au moins un moteur commandable (30, 32, 34) propre à déplacer le point de prise de vue en réponse à des commandes de déplacement reçues par l'intermédiaire du réseau téléphonique,
- **en ce que** le point de prise de vue est monté à rotation autour d'un premier et d'un second axes (24, 28) de rotation non colinéaires, et
- **en ce que** ledit au moins un moteur est apte à déplacer en rotation le point de prise de vue autour des premier et second axes, les rotations autour du premier et du second axes étant commandables indépendamment l'une de l'autre.

9. Support (120) pour un téléphone mobile équipé d'au moins un point de prise de vue pour prendre des images, **caractérisé en ce qu'**il comporte :
- des moyens d'accouplement / désaccouplement du téléphone mobile au support, et
- au moins un moteur commandable propre à déplacer les moyens d'accouplement/désaccouplement en réponse à des commandes de déplacement reçues par le téléphone mobile de manière à déplacer le point de prise de vue, et
- **en ce que** ledit au moins un moteur est apte à déplacer en rotation le point de prise de vue autour de premier et second axes non colinéaires, les rotations autour du premier et du second axes étant commandables indépendamment l'une de l'autre.

10. Second téléphone (42) apte à établir au moins une liaison téléphonique avec un premier téléphone mobile par l'intermédiaire d'un réseau téléphonique ce second téléphone comportant un écran (8) d'affichage d'images prises à l'aide du premier téléphone mobile, ce premier téléphone mobile étant conforme à la revendication 8 ou adapté pour être accouplé/désaccouplé à un support conforme à la revendication 9,
**caractérisé en ce que** ce second téléphone est équipé d'un module (60) pour envoyer des commandes de déplacement audit au moins un moteur du premier téléphone mobile (2) ou du support (120), par l'intermédiaire du réseau téléphonique.

## Claims

1. Image capturing system comprising:
- a first mobile telephone (2; 122) capable of establishing at least one telephone connection with a second telephone by means of a telephone network (44), this first mobile telephone being equipped with at least one viewfinder point (20; 22) for capturing images; and
- the second telephone (42) being capable of displaying the images captured using the first mobile telephone;
**characterized in that** the first telephone comprises at least one controllable motor (30, 32, 34; 142) suited to move the viewfinder point in response to movement commands received by the first mobile telephone;
- **in that** the second telephone comprises a module (60) for sending the movement commands to the first mobile telephone by means of the telephone network;
- **in that** the viewfinder point is mounted to rotate about first and second non-colinear rotation axes (24, 28); and
- **in that** said at least one motor is capable of rotating the or each viewfinder point about the first and second axes, the rotations about the first and the second axes being controllable independently of each other.

2. System according to Claim 1, **characterized in that** said at least one motor (30, 32, 34) is joined to the first mobile telephone.

3. System according to Claim 1, **characterized in that** it comprises a support (120) independent of the first mobile telephone (122), this independent support comprising means (144) for mechanical connection/disconnection of the first mobile telephone to/from the support, and **in that** this support comprises said at least one motor (142), said at least one motor being capable of moving said connection/disconnection means in response to movement commands received by the first mobile telephone so as to move the viewfinder point.

4. System according to Claim 3, **characterized in that** the independent support (120) comprises a movable bar (134) equipped with mechanical connection/disconnection means (144), and **in that** said at least one motor is capable of moving said bar in response to movement commands received by the first mobile telephone.

5. System according to any one of the preceding claims, **characterized in that** the first mobile telephone (2, 122) comprises two viewfinder points (20, 22) spaced apart from one another so as to be able to produce stereoscopic images.

6. System according to any one of the preceding claims, **characterized in that** the viewfinder point (20, 22) comprises a zoom adjustable in response to zoom commands received by the first mobile telephone, and **in that** the second telephone comprises a module (60) for sending zoom commands to the first mobile telephone by means of the telephone network.

7. System according to any one of the preceding claims, **characterized in that** the first mobile telephone comprises at least one camera (46) equipped with the viewfinder point.

8. First mobile telephone (2) capable of establishing at least one telephone connection with a second telephone by means of a telephone network, this first mobile telephone being equipped with at least one viewfinder point (20, 22) for capturing images, **characterized in that**:
- the first telephone comprises at least one controllable motor (30, 32, 34) suited to move the viewfinder point in response to movement commands received by means of the telephone network;
- the viewfinder point is mounted to rotate about first and second non-colinear rotation axes (24, 28); and
- said at least one motor is capable of rotating the viewfinder point about the first and second axes, the rotations about the first and the second axes being controllable independently of each other.

9. Support (120) for a mobile telephone equipped with at least one viewfinder point for capturing images, **characterised in that** it comprises:
- means for connecting/disconnecting of the mobile telephone to/from the support; and
- at least one controllable motor suited to move the connection/disconnection means in response to movement commands received by the mobile telephone so as to move the viewfinder point; and
- **in that** said at least one motor is capable of rotating the viewfinder point about the first and second non-colinear axes, the rotations about the first and the second axes being controllable independently of each other.

10. Second telephone (42) capable of establishing at least one telephone connection with a first mobile telephone by means of a telephone network, this second telephone comprising a screen (8) for displaying images captured using the first mobile telephone, this first mobile telephone being according to Claim 8 or suited to be connected to/disconnected from a support according to Claim 9,
**characterized in that** this second telephone is equipped with a module (60) for sending movement commands to said at least one motor of the first mobile telephone (2) or of the support (120), by means of the telephone network.

## Patentansprüche

1. Bilderfassungssystem, Folgendes aufweisend:
- ein erstes Mobiltelefon (2; 122), das fähig ist, mindestens eine Telefonverbindung mit einem zweiten Telefon über ein Telefonnetz (44) aufzubauen, wobei dieses erste Mobiltolefon mit mindestens einem Bilderfassungspunkt (20; 22) zum Erfassen von Bildern ausgestattet ist, und
- wobei das zweite Telefon (42) fähig ist, die mit Hilfe des ersten Mobiltolefons erfassten Bilder anzuzeigen,
**dadurch gekennzeichnet, dass** das erste Telefon mindestens einen steuerbaren Motor (30, 32, 34; 142) aufweist, der sich dafür eignet, den Bilderfassungspunkt als Reaktion auf vom ersten Mobiltelefon empfangene Bewegungsbefehle zu verlegen,
- dass das zweite Telefon ein Modul (60) zum Senden der Hewegungsbefehle an das erste Mobiltelefon über das Telefonnetz aufweist,
- dass der Bilderfassgungspunkt mit Drehung µm eine erste und eine zweite Rotationsachse (24, 28), die nicht kolinear sind, installiert ist, und
- dass der mindestens eine Motor fähig ist, den oder jeden Bilderfassungspunkt um die erste und zweite Achse in Drehung zu bewegen, wobei die Drehungen um die erste und die zweite Achse unabhängig voneinander gesteuert werden können.

2. System nach Anspruch 1, **dadurch gekennzeichnet, dass** der mindestens eine Motor (30, 32, 34) fest mit dem ersten Mobiltelefon verbunden ist.

3. System nach Anspruch 1, **dadurch gekennzeichnet, dass** es einen vom ersten Mobiltelefon (122) unabhängige Halter (120) aufweist, wobei dieser unabhängige Halter Mittel (144) zum mechanischer Koppeln/Abkoppeln des ersten Mobiltelefon mit/von dem Halter aufweist, und dass dieser Halter den mindestens einen Motor (142) aufweiset, wobei der mindestens eine Motor fähig ist, die Koppel-/Abkoppelmittel als Reaktion auf vom ersten Mobiltelefon empfangene Bewegungsbefehle zu bewegen, dass der Bilderfassungspunkt verlegt wird.

4. System nach Anspruch 3, **dadurch gekennzeichnet, dass** der unabhängige Halter (120) einen beweglichen Kipper (134) aufweist, der mit mechanischen Koppel-/Abkoppelmittoln (144) ausgestattet ist, und dass der mindestens eine Motor fähig ist, den Kipper als Reaktion auf vom ersten Mobiltelefon empfangene Befehle zu bewegen.

5. System nach einem der vorhergehenden Ansprüche, **dadurch gekennzeichnet, dass** das erste Mobiltelefon (2, 122) zwei Bilderfassungpunkte (20, 22) aufweist, die voneinander derart beabstandet sind, dass stereoskopische Bilder hergestellt werden können.

6. System nach einem der vorhergehenden Ansprüche, **dadurch gekennzeichnet, dass** der Bilderfassungspunkt (20, 22) einen Zoom aufweist, der als Reaktion auf vom ersten Mobiltelefon empfangene Zoombefehle einstellbar ist, und dass das zweite Telefon ein Modul (60) aufweist, um Zoombefehle zu dem ersten Mobiltelefon über das Telefonnetz zu senden.

7. System nach einem der vorhergehenden Ansprüche, **dadurch gekennzeichnet, dass** das erste Mobiltelefon mindestens eine Kamera (46), die mit dem Bilderfassungspunkt ausgestattet ist, aufweist.

8. Erstens Mobiltelefon (2), das fähig ist, mindestens eine Telefonverbindung mit einem zweiten Telefon über ein Telefonnetz aufzubauen, wobei dieses erste Mobiltelefon mit mindestens einem Bilderfassungspunkt (20, 22) zum Erfassen von Bildern ausgestattet ist, **dadurch** gekenntzeichnet,
- dass das erste Telefon mindestens einen steuerbaren Motor (30, 32, 34) aufweist, der sich dafür eignet, den Bilderfassungspunkt als Reaktion auf Bewegungsbefehle, die über das Telefonnetz empfangen werden, zu verlegen,
- dass der Bilderfassungspunkt um eine erste und eine zweite Rotationsachse (24, 28), die nicht kolinear sind, drehbar installiert ist, und
- dass der mindestens eine Motor fähig ist, den Bilderfassungspunkt um die erste und zweite Achse in Drehung zu bewegen, wobei die Drehungen um die erste und die zweite Achse unabhängig voneinander steuerbar sind.

9. Halter (120) für ein Mobiltelefon, das mit mindestens einem Bilderfassungspunkt zum Erfassen von Bildern ausgestattet ist, **dadurch gekennzeichnet, dass** er Folgendes aufweist:
- Mittel zum Koppeln/Abkoppeln des Mobiltelefons mit/von dem Halter und
- mindestens einen steuerbaren Motor, der fähig ist, die Koppel-/Abkoppelmittel als Reaktion auf vom Mobiltelefon empfangene Bewegungsbefehle zu bewegen, um den Bilderfassungspunkt zu verlegen, und
- dass der mindestens eine Motor fähig ist, den Bilderfassungspunkt in Drehung um die erste und zweite nicht kolineare Achse zu bewogen, wobei die Drehungen um die erste und die zweite Achse voneinander unabhängig steuerbar sind.

10. Zweites Telefon (42), das fähig ist, mindestens eine Telefonverbindung mit einem ersten Mobiltelefon über ein Telefonnetz aufzubauen, wobei dieses zweite Telefon ein Display (8) zum Anzeigen von Bildern aufweist, die mit Hilfe des ersten Mobiltelefons erfasst wurden, wobei dieses erste Mobiltelefon Anspruch 8 entspricht oder angepasst ist, um auf einem Halter gemäß Anspruch 9 gekoppelt/von ihm abgekoppelt zu werden
**dadurch gekennzeichnet**, das das zweite Telefon mit einem Modul (60) zum Senden der Bewegungsbefehle zu dem mindestens einen Motor des ersten Mobiltelefons (2) oder des Halters (120) über das Telefonnetz ausgestattet ist.
